# EUROPEAN PATENT SPECIFICATION

(11) **EP 4 166 948 B1**
(45) Date of publication and mention of the grant of the patent: **17.01.2024**
(21) Application number: 22199156.5
(22) Date of filing: 30.09.2022
(51) Int. Cl.: G01P 15/08, G01L 5/00, G05D 1/02, A01G 9/14

(54) **IMPACT DETECTION SENSOR FOR A TUBE RAIL CART AND TUBE RAIL CART EQUIPPED THEREWITH**
STOSSSENSOR FÜR EINEN ROHRSCHIENENWAGEN UND MIT EINEM SOLCHEN SENSOR AUSGETATTETER ROHRSCHIENENWAGEN
DÉTECTEUR D'IMPACT POUR CHARIOT SUR RAIL TUBULAIRE ET CHARIOT SUR RAIL TUBULAIRE ÉQUIPÉ D'UN TEL DÉTECTEUR

(30) Priority: 13.10.2021 BE 202105804
(43) Date of publication of application: 19.04.2023
(73) Proprietor: B&A Automation BVBA, 2320 Hoogstraten (BE)
(72) Inventor: BOGAERTS, Joris, 2960 Brecht (BE)
(74) Representative: Van hunsel, Lieven M.S.

(56) References cited:
- EP-B1- 3 446 188
- US-A- 3 625 068
- US-A- 3 625 178

## Description

The present invention relates to an impact detection sensor for a tube rail cart and to a tube rail cart equipped therewith.

In particular, the invention is intended for a tube rail cart used in a tube rail system as used in horticulture for the cultivation of tomatoes, peppers, and other crops in greenhouses.

In said cultivations the crops are cultivated in parallel rows which extend alongside one another departing from a paved path made of concrete or the like that extends perpendicularly to the rows.

Heating tubes are mounted between the rows, each time with two parallel tubes which at a fixed distance from each other are mounted on supports at a small height above the ground over the full length of the rows with crops.

Said tubes are used as rails for moving tube rail carts between the crops from where the crops can be treated handled, for example for spraying, harvesting, or the like, either manually or automatically for certain actions.

Such tube rail carts can therefore be provided with all kinds of accessories such as a hose reel or liquid tank or a spraying installation or a scissor lift for picking the fruit up to a certain height above the rails.

The tube rail cart is provided with four flanged wheels with which the tube rail cart is able to travel on the rails between the crops as well as along or on the aforementioned path, for example to drive onto and off the rails and for going from one rail to a next rail or for the supply and removal of crops or harvested fruit or the like.

Such tube rail carts executed as an automated guided vehicle which is provided with a programmed controller to cover a certain track over the path from one rail to a next rail are already known, whereby it is important that the tube rail cart is perfectly in line with the rails to be able to drive onto the rails from the concrete path.

When automatically covering the track, the tube rail cart may not be perfectly aligned, which can lead to problems when driving onto the rails and interfere with the control program.

Likewise, unexpected obstacles may appear on the preprogrammed track of the tube rail cart which may also lead to unwanted situations.

EP 3 446 188 B1 discloses an autonomous vehicle comprising a bumper and means to detect collision of the bumper with an object based on a displacement of the bumper.

US 3 625 178 A and US 3 625 068 A are examples of known shock sensors.

The object of the present invention is a robust and mechanical impact detection sensor with which such tube rail carts can be equipped to be able to detect such unwanted situations and as a function of this have the tube rail cart perform the necessary corrective or evasive manoeuvres.

To this end, the invention relates to an impact detection sensor as defined in claim 1, for a tube rail cart which is composed of a shaft and a conical valve with a valve shaft which in resting condition coaxially extends through the shaft with a lateral play in the shaft, whereby at one end the shaft is provided with a conical valve seat for the valve and whereby the impact detection sensor is provided with a return spring which pulls or pushes the valve in an axial direction against the valve seat and whereby the valve shaft or the shaft at the end of the impact detection sensor with the valve is provided with an impact sensitive element which in case of a lateral impact causes the valve to move laterally relative to the valve seat and consequently also causes the valve shaft to move axially relative to the shaft against the force of the return spring, whereby the valve shaft is provided with a collar and the shaft is provided with a sensor for detecting the position of the collar relative to the sensor.

The construction of such impact detection sensor is very simple and robust and can handle a relatively heavy impact such as may occur when manoeuvring the tube rail cart. Moreover, the impact detection sensor contains few sensitive electronics and moving components and is thus not very subject to wear and tear and defects, such that it is very reliable.

The impact detection sensor can, for example, be completely or largely made of metal, such that it is even more robust.

The sensor is, for example, an inductive sensor without physical contact with the collar of the valve shaft, such that the sensor is not subjected to contact wear and tear either.

Preferably, the impact sensitive element is executed as a wheel that is mounted freely rotatably around an axle in the extension of the valve shaft such that skid is prevented in case of an impact.

Preferably the collar forms a pivotal point as it were around which the valve shaft is able to rotate around an axle perpendicular to the axis of the shaft in case of an impact, such that the movement is under better control in case of an impact.

The invention also relates to a tube rail cart according to claim 11, which is equipped with at least one impact detection sensor according to the invention, whereby the shaft of the impact detection sensor is mounted on the chassis of the tube rail cart. Traditionally, the tube rail cart is provided with flanged wheels to be able to drive onto parallel tube rails from a concrete path with its front end, for which the tube rail cart needs to be brought in line with the rails and for which purpose according to the invention the tube rail cart is provided at its front end with two aforementioned impact detection sensors whose impact sensitive element protrudes from under the chassis on the level of the rails and at a distance from each other that is slightly greater than the distance between the rails to detect a bad alignment of the tube rail cart in this way when, upon driving onto the rails, one of the two impact detection sensors generates a signal.

Preferably, the tube rail cart is executed as an automated guided vehicle or AGV that is provided with an on-board computer with a programmed controller to cover a certain track over the path from one rail to a next rail, whereby the on-board computer is connected to the sensors of the impact detection sensors and the on-board computer is provided with a correction algorithm to correct the alignment of the tube rail cart in the event that the on-board computer receives a signal from one of the two sensors.

With the intention of better showing the characteristics of the invention, a preferred embodiment of an impact detection sensor according to the invention for a tube rail cart and a tube rail cart equipped therewith is described, by way of an example without any limiting nature, with reference to the accompanying drawings wherein:
figure 1 schematically shows a floor plan of a section of a greenhouse equipped with a tube rail system according to the invention;
figure 2 schematically shows a perspective view of a tube rail cart according to the invention as indicated by arrow F2 in figure 1;
figure 3 shows the section indicated by frame F3 in figure 1 on a larger scale with the tube rail cart not aligned on the rails;
figure 4 corresponds with figure 3 but with the tube rail cart aligned on the rails after a correction manoeuvre;
figures 5 and 6 show a view according to the arrows F5 and F6 in figure 2, with partial omission in figure 6;
figure 7 shows an impact detection sensor according to the invention as indicated by arrow F7 in figure 5 on a larger scale;
figure 8 shows a longitudinal section according to line VIII-VIII in figure 7 and this with the impact detection sensor at rest;
figure 9 shows one and the same cross-section as that of figure 8 but upon detecting an impact;
figure 10 shows the tube rail cart of figure 5 but with additional impact detection sensors;
figures 11 and 12 show two alternative embodiments of an impact detection sensor according to the invention.

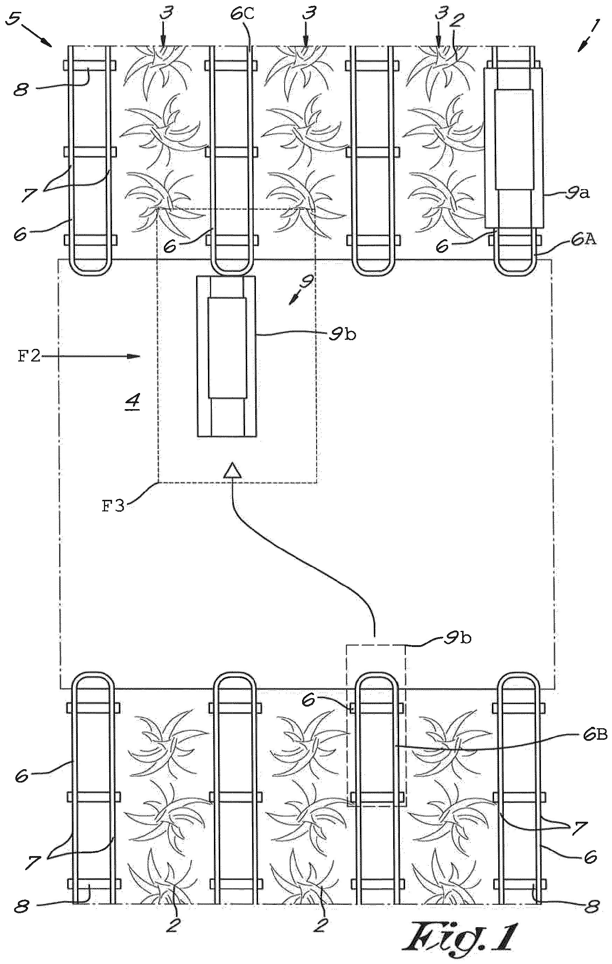

The floor plan of figure 1 shows a classic situation in a heated greenhouse 1 whereby crops 2 are planted in parallel rows 3, said rows extending perpendicularly on a paved path 4 made in concrete or the like that runs through the greenhouse 1, for example for the supply of new crops 2 and for the removal of harvested fruit.

The greenhouse 1 is further provided with a tube rail system 5 with rails 6 that extend between the rows 3 with crops 2 over the length of the rows 3, departing from the path 4.

The rails 6 are formed by two parallel tubes 7 between each pair of rows 3 of crops, said tubes 7 being affixed at a fixed distance from each other and at a small height above the ground on fixed supports 8.

The tubes 7 are for example executed as hollow round tubes that are part of a heating system where hot water can be guided through for heating the greenhouse, for example.

Traditionally, the tube rail system 5 is executed with tube rail carts 9 that are designed to be able to travel on the rails 6 between the crops 2, for example for harvesting the fruit or spraying the crops 2 or the like.

To this end, the tube rail carts 9 are equipped with flanged wheels 10 that are also suitable to drive and manoeuvre on the path 4, thanks to a controller (not shown and not described in more detail).

Figure 1 shows such tube rail cart 9a located on the rails 6A.

The tube rail carts 9 are also suitable for driving onto and off the rails 6 and travelling on the path 4 from one rail 6 to a next rail 6.

Figure 1, for example, shows a tube rail cart 9b that has driven off the rail 6b and has travelled on the path 4 to drive onto the rail 6C on the other side of the path 4.

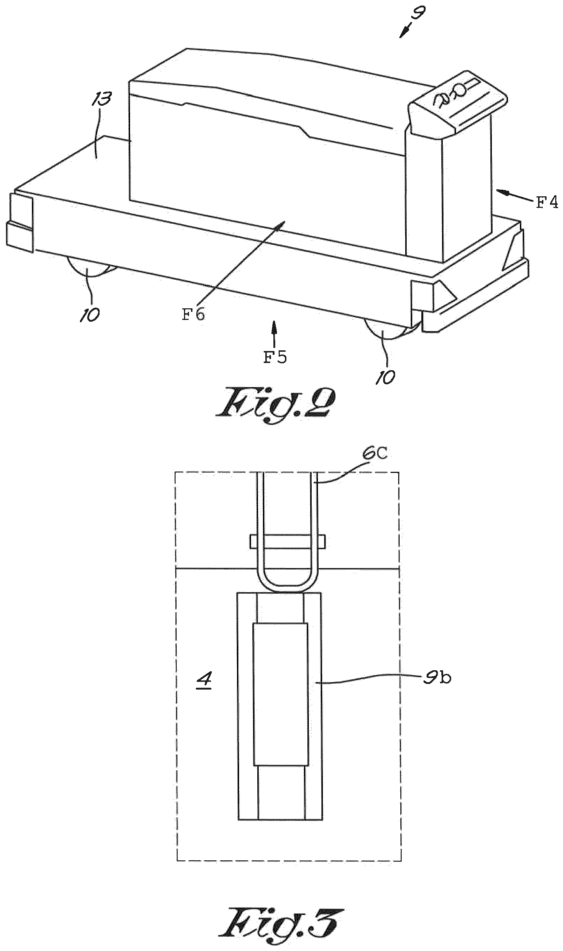

However, after making an S-turn as shown with the arrow in figure 1, the tube rail cart 9b has ended up in front of rail 6C in a position whereby the tube rail cart 9b is not properly aligned relative to the rail 6C as shown in figure 3, which can cause problems upon wanting to drive onto rail 6c, resulting in possible damage.

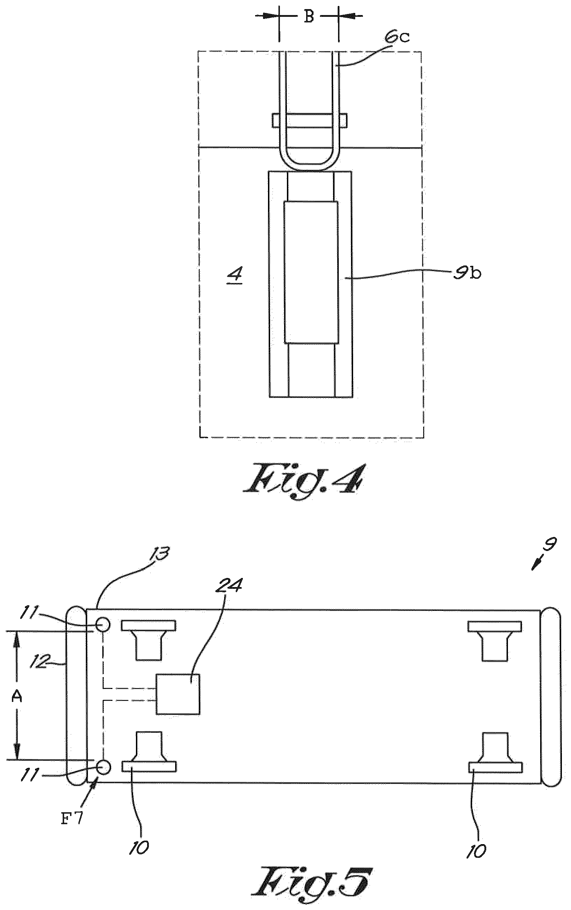

To prevent this, the purpose of the invention is to provide the tube rail cart 9 with two impact detection sensors 11 according to the invention to be able to detect the misalignment and subsequently be able to make a correction manoeuvre to nicely align the tube rail cart 9b with rail 6C as shown in figure 4 and thus, without damage, drive onto said rail 6C.

Figure 5 shows the position of said impact detection sensors 11 on the tube rail cart 9, namely at the front 12 of the tube rail cart 9 at a lateral distance A from each other, which is slightly greater than the breadth B of the rails 6 and with an impact sensitive element 11a that protrudes from under the chassis 13 of the tube rail cart 9 and is located at the level of the rails 6 when the tube rail cart 9 is located on the path 4. The tube rail cart 9 can also be provided with extra impact detection sensors 11 at the back, for example for tube rail carts which are able to drive onto the tube rails from both the front and the back.

Preferably, the impact detection sensors 11 are symmetrically positioned relative to the longitudinal symmetry plane between the flanged wheels 10.

Front end is understood to mean the end with which the tube rail cart 9 is intended to drive onto the rails 6 from the path 4.

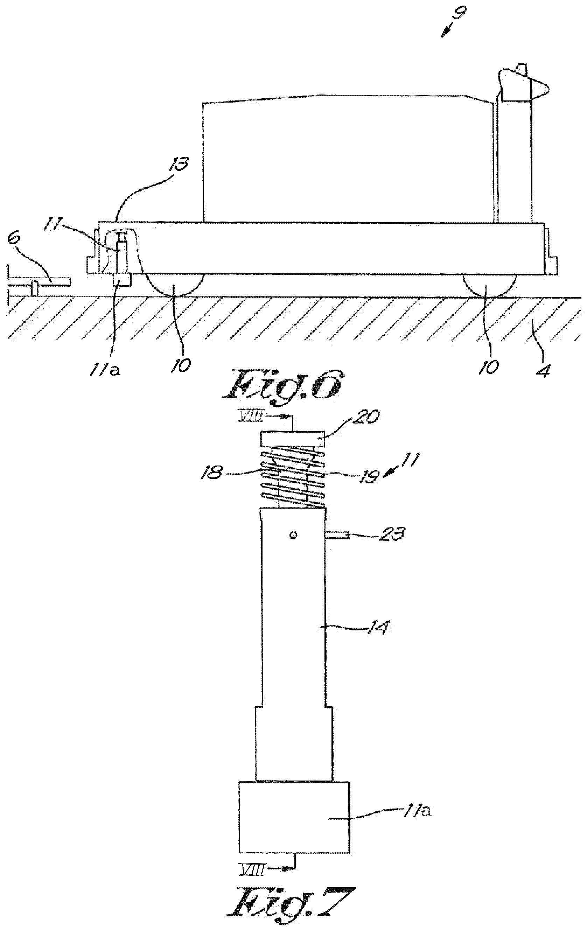

Figures 7 to 9 show such impact detection sensor 11 on a larger scale.

In the example shown, said impact detection sensor 11 is composed of a shaft 14 in the form of a hollow tube and a conical valve 15 on a valve shaft 16 which in resting condition extends coaxially through the shaft 14 according to the geometric axis X-X' of the shaft 14 and protrudes with an end 18 along the top.

Preferably, the shaft 14 and the valve 15 and valve shaft 16 are made of metal.

The impact detection sensor 11 with the shaft 14 is vertically mounted on the chassis 13 of the tube rail cart 9, whereby the shaft 14 is provided at its lower end with a conical valve seat 17 for the valve 15.

The impact detection sensor 11 is further provided with a return spring 19 which is tensioned around the protruding end 18 of the valve shaft 16 between the upper end of the shaft 14 and a cantilever 20 at the head of the valve shaft 16.

Under the influence of the return spring 19, the valve 15 is pulled against the valve seat 17 in axial direction.

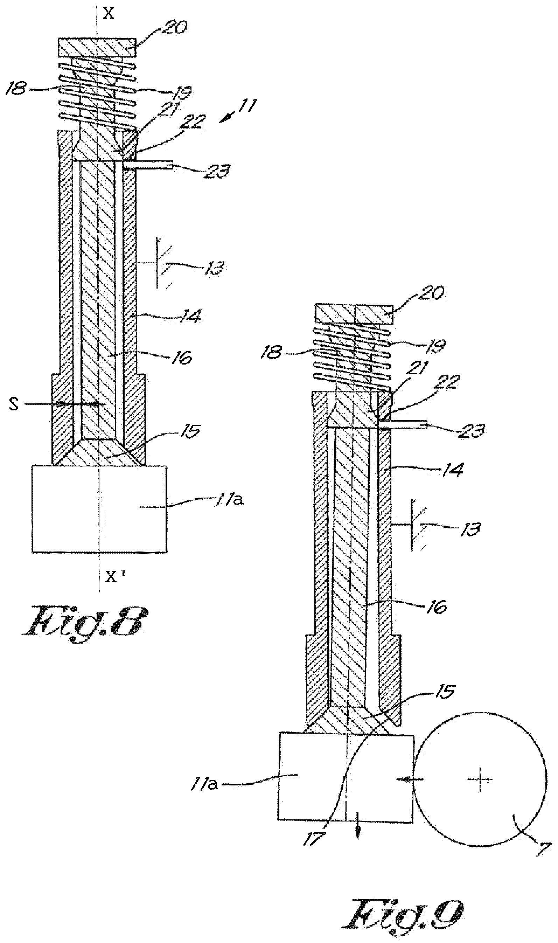

In the resting condition of figure 8, the valve shaft 16 is co-axially located in the shaft 14 with a certain radial play S at the bottom.

In the example, the conical valve 15 is made in a conically tapering way toward the valve shaft 16, whereas the valve seat 17 forms a conically tapering entrance of the shaft 14.

For example, the valve 15 and the valve seat 17 possess a conicity of around 45°.

At a distance under the upper end of the shaft 14, the valve shaft 16 is provided with a collar 21, the outer diameter of which is slightly less than the inner diameter of the shaft 14.

The aforementioned impact sensitive section 11a is suspended or mounted in the extension of the valve shaft 16 to the valve 15 and is for example executed as a wheel that is mounted freely rotatably around an axle in the extension of the valve shaft 16.

When the impact sensitive element 11a collides with a tube 7 of the rails 6 in case of a manoeuvre of the tube rail cart 9, as schematically shown in figure 9, the collar 21 will acts as a rotation point for the rotation of the valve shaft 16 in the shaft around a geometric axis perpendicular to the axis X-X' of the shaft 14.

To this end the collar 21 can be provided with the necessary roundings or chamfers.

Upon rotating the valve shaft 16, the valve 15 moves laterally in the valve seat 17, such that the valve shaft 16 ends up askew in the shaft 14 and the valve 15 and the collar 21 are pushed downward against the force of the return spring 19 as shown in figure 9.

Just under the level of the position of the collar 21 in the resting condition of figure 8, a recess 22 is provided in the casing of the shaft 14 between the collar 21 and the valve 15.

A sensor 23 is mounted in the recess 22.

The sensor 23 is, for example, an inductive sensor for detecting the position of the collar 21 relative to the sensor 23.

In a situation as shown in figure 9, the sensor 23 detects a collision with the rails 6 and then generates a signal that can be coupled to an on-board computer 24.

When the tube rail cart 9 approaches the rails in a non-aligned way, the on-board computer 24 will detect a signal of one of the two impact detection sensors 11, whereas it will not receive a signal from the other impact detection sensor 11.

From this, the on-board computer 24 is able to deduce that the tube rail cart is incorrectly aligned relative to the rail and it will be able to initiate a correcting manoeuvre, at least to the extent that the tube rail cart 9 is provided with a controllable controller and drive that are connected to the on-board computer, as in the case of a tube rail cart 9 which is executed as an automated guided vehicle (AGV) that is provided with a programmed controller to cover a certain track over the path from one rail to a next rail.

The on-board computer 24 will have to be equipped with a correction algorithm for this purpose to correct the alignment of the tube rail cart 9 in the event that the on-board computer 24 receives a signal from one of the two sensors 23.

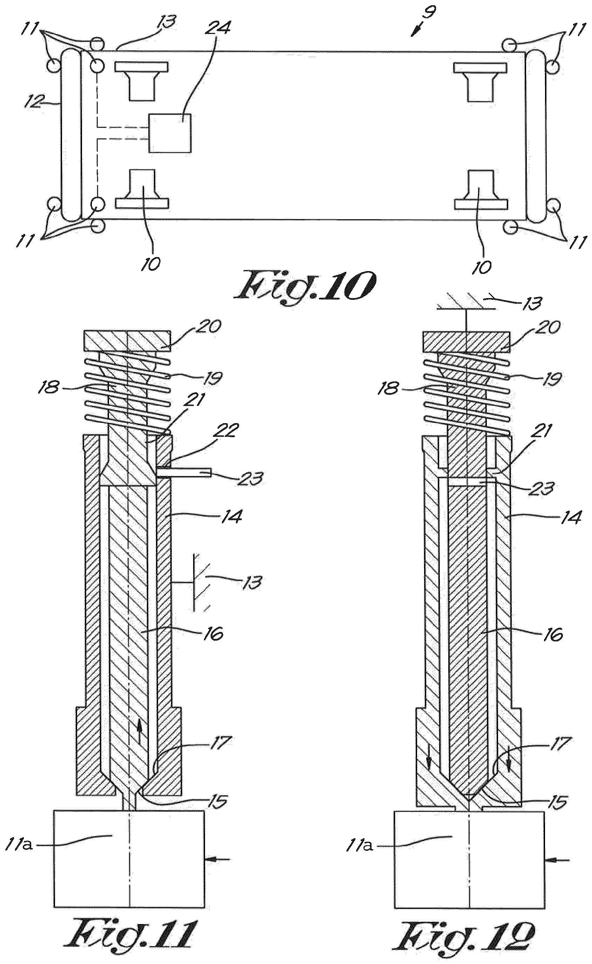

Such impact detection sensors 11 are not exclusively intended to detect alignment errors of a tube rail cart 9, but can also serve as a collision alarm for all kinds of obstacles that may occur on the path of the tube rail cart 9. In that case such impact detection sensors 11 can be arranged along the contour of the chassis, for example, as shown in figure 10.

Obviously, the impact detection sensors 11 can also be used for other applications, for example on AGVs in an automated warehouse.

Figure 11 shows an alternative embodiment of an impact detection sensor 11 according to the invention which differs in the fact that in this case the valve 15 is conically tapering in the direction of the impact sensitive element 11a instead of in the direction of the protruding end 18 of the valve shaft 16.

In this case, the valve shaft 16 with the collar 21 is pushed upward in case of an impact to the left on the impact sensitive element 11a and the sensor 23 is located just above the level of the collar 21, i.e. between the collar 21 and the upper end of the shaft 14.

Figure 12 shows yet another variant whereby in this case the valve shaft is mounted on the chassis 13 and the shaft 14 is movable under the influence of an impact on the impact sensitive element 11a which in this case is mounted to the shaft 14.

In this case, the return spring 19 is a tension spring which at rest pulls the shaft 14 at the level of the valve seat 17 against the valve 15.

Another possible alternative difference is that the collar 21 can be provided in the shaft 14 and serve as rotation point for the shaft 14 in relation to the fixed valve shaft 16.

The sensor 23 is then positioned in the valve shaft 16 and is located between the collar 21 and the valve 15.

It is understood that the impact detection sensor 11 does not necessarily have to be mounted vertically with the impact sensitive element 11a facing down but can also be mounted the other way around or askew.

The present invention is by no means limited to the embodiments described as an example and shown in the figures, but an impact detection sensor according to the invention for a tube rail cart and a tube rail cart equipped therewith can be realised in all kinds of forms and dimensions without departing from the scope of the invention, which is defined by the appended claims.

## Claims

1. Impact detection sensor for a tube rail cart, said impact detection sensor being composed of a shaft (14) and a conical valve (15) with a valve shaft (16) which in resting condition coaxially extends through the shaft (14) with a lateral play in the shaft (14), whereby at one end the shaft (14) is provided with a conical valve seat (17) for the conical valve (15) and whereby the impact detection sensor (11) is provided with a return spring (19) which is configured to pull or push the conical valve (15) in an axial direction against the valve seat (17) and whereby the valve shaft (16) or the shaft (14) at the end of the impact detection sensor (11) with the conical valve (15) is provided with an impact sensitive element (11a) which in case of a lateral impact is configured to cause the conical valve (15) to move laterally relative to the valve seat (17) and consequently also to cause the valve shaft (16) to move axially relative to the shaft (14) against the force of the return spring (19), whereby the valve shaft (16) is provided with a collar (21) and the shaft (14) is provided with a sensor (23) for detecting the position of the collar (21) relative to the sensor (23).

2. Impact detection sensor according to claim 1, **characterised in that** the collar (21) of the sensor (23) is in metal and the sensor (23) is an inductive sensor.

3. Impact detection sensor according to claim 2, **characterised in that** the valve shaft (16) and the shaft (14) are made in metal and the sensor (23) is an inductive sensor.

4. Impact detection sensor according to any one of the previous claims, **characterised in that** the impact sensitive element (11a) is executed as a wheel that is mounted freely rotatably around an axle in the extension of the valve shaft (16) .

5. Impact detection sensor according to any one of the previous claims, **characterised in that** the conical valve (15) conically tapers toward the valve shaft (16), whereas the valve seat (17) forms a conically tapering entrance of the shaft (14).

6. Impact detection sensor according to any one of the previous claims, **characterised in that** the valve (15) and the valve seat (17) possess a conicity of around 45°.

7. Impact detection sensor according to any one of the previous claims, **characterised in that** the collar (21) forms a pivotal point for the valve shaft (16) in the shaft (14) around an axle perpendicular to the axis of the shaft (14).

8. Impact detection sensor according to any one of the previous claims, **characterised in that** the outer diameter of the collar (21) is slightly smaller than the inner diameter of the shaft (14).

9. Impact detection sensor according to any one of the previous claims, **characterised in that** a part of the valve shaft (16) protrudes from the shaft (14) at the other end of the valve (15), whereby said end is provided with a cantilever (20) and a spring (19) which is tensioned between said cantilever (20) and the shaft (14).

10. Impact detection sensor according to claim 9, **characterised in that** the spring (19) is mounted around the aforementioned protruding end of the valve shaft (16).

11. Tube rail cart, equipped with at least one impact detection sensor (11) according to any one of the previous claims, whereby the shaft (14) of the impact detection sensor (11) is mounted on the chassis (13) of the tube rail cart (9).

12. Tube rail cart according to claim 11, **characterised in that** said tube rail cart is provided with flanged wheels (10) to be able to drive onto or off parallel tube rails (6) with its front or rear end from a concrete path (4), for which the tube rail cart (9) needs to be brought in line with the rails (6) and for which purpose the tube rail cart (9) is provided on the relevant end with two aforementioned impact detection sensors (11) whose impact sensitive element (11a) protrudes from under the chassis (13) on the level of the rails (6) and at a distance from each other which is slightly greater than the distance between the rails (6) to detect a bad alignment of the tube rail cart (9) in this way when, upon driving onto the rails (6), one of the two impact detection sensors (11), generates an impact signal.

13. Tube rail cart according to claim 12, **characterised in that** the impact detection sensors (11) are symmetrically positioned relative to the longitudinal symmetry plane between the flanged wheels (10) to the left and right of the tube rail cart(9).

14. Tube rail cart according to claim 13, **characterised in that** it is executed as an automated guided vehicle that is provided with an on-board computer (24) with a programmed controller to cover a certain track over the path from one rail (6) to a next rail, whereby the controller is connected to the sensors (23) of the impact detection sensors (11) and the on-board computer (24) is provided with a correction algorithm to correct the alignment of the tube rail cart (9) in the event that the on-board computer (24) receives a signal from one of the two sensors (23).

## Patentansprüche

1. Aufpralldetektionssensor für einen Rohrschienenwagen, wobei der Aufpralldetektionssensor aus einer Welle (14) und einem Kegelventil (15), das einen Ventilschaft (16) umfasst, besteht, wobei der Ventilschaft sich im Ruhezustand koaxial durch die Welle (14) mit einem seitlichen Spiel in der Welle (14) erstreckt, wobei die Welle (14) an einem Ende mit einem konischen Ventilsitz (17) für das Kegelventil (15) versehen ist, und wobei der Aufpralldetektionssensor (11) mit einer Rückstellfeder (19) versehen ist, die dazu eingerichtet ist, das Kegelventil (15) in axialer Richtung gegen den Ventilsitz (17) zu ziehen oder zu drücken, und wobei der Ventilschaft (16) oder die Welle (14) an dem Ende des das Kegelventil (15) umfassenden Aufpralldetektionssensors (11) mit einem aufprallsensitiven Element (11a) versehen ist, das im Falle eines seitlichen Aufpralls so konfiguriert ist, dass das Kegelventil (15) sich seitlich relativ zum Ventilsitz (17) bewegt und folglich auch dass der Ventilschaft (16) sich axial relativ zu der Welle (14) gegen die Kraft der Rückstellfeder (19) bewegt, wobei der Ventilschaft (16) mit einem Kragen (21) versehen ist und die Welle (14) mit einem Sensor (23) zum Erfassen der Position des Kragens (21) relativ zum Sensor (23) versehen ist.

2. Aufpralldetektionssensor nach Anspruch 1, **dadurch gekennzeichnet, dass** der Kragen (21) des Sensors (23) aus Metall besteht und der Sensor (23) ein induktiver Sensor ist.

3. Aufpralldetektionssensor nach Anspruch 2, **dadurch gekennzeichnet, dass** der Ventilschaft (16) und die Welle (14) aus Metall hergestellt sind und der Sensor (23) ein induktiver Sensor ist.

4. Aufpralldetektionssensor nach einem der vorhergehenden Ansprüche, **dadurch gekennzeichnet, dass** das aufprallempfindliche Element (11a) als ein Rad ausgeführt ist, das frei drehbar um eine Radachse in der Verlängerung des Ventilschafts (16) gelagert ist.

5. Aufpralldetektionssensor nach einem der vorhergehenden Ansprüche, **dadurch gekennzeichnet, dass** das Kegelventil (15) sich zum Ventilschaft (16) hin konisch verjüngt, während der Ventilsitz (17) einen konisch verjüngten Eingang der Welle (14) bildet.

6. Aufpralldetektionssensor nach einem der vorhergehenden Ansprüche, **dadurch gekennzeichnet, dass** das Ventil (15) und der Ventilsitz (17) eine Konizität von etwa 45° aufweisen.

7. Aufpralldetektionssensor nach einem der vorhergehenden Ansprüche, **dadurch gekennzeichnet, dass** der Kragen (21) einen Dreh- und Angelpunkt für den Ventilschaft (16) in der Welle (14) um eine Radachse senkrecht zur Achse der Welle (14) bildet.

8. Aufpralldetektionssensor nach einem der vorhergehenden Ansprüche, **dadurch gekennzeichnet, dass** der Außendurchmesser des Kragens (21) geringfügig kleiner als der Innendurchmesser der Welle (14) ist.

9. Aufpralldetektionssensor nach einem der vorhergehenden Ansprüche, **dadurch gekennzeichnet, dass** ein Teil des Ventilschafts (16) an dem anderen Ende des Ventils (15) aus der Welle (14) herausragt, wobei dieses Ende mit einem Ausleger (20) und einer Feder (19) versehen ist, die zwischen dem oben genannten Ausleger (20) und der Welle (14) gespannt ist.

10. Aufpralldetektionssensor nach Anspruch 9, **dadurch gekennzeichnet, dass** die Feder (19) um das vorgenannte herausragende Ende des Ventilschafts (16) herum montiert ist.

11. Rohrschienenwagen, der mit mindestens einem Aufpralldetektionssensor (11) nach einem der vorhergehenden Ansprüche ausgestattet ist, wobei die Welle (14) des Aufpralldetektionssensors (11) an dem Fahrgestell (13) des Rohrschienenwagens (9) montiert ist.

12. Rohrschienenwagen nach Anspruch 11, **dadurch gekennzeichnet, dass** der oben genannte Rohrschienenwagen mit Spurkranzrädern (10) versehen ist, um in Bezug auf eine Betonbahn (4) mit seinem vorderen oder hinteren Ende auf parallele Rohrschienen (6) ein- oder ausfahren zu können, wozu der Rohrschienenwagen (9) in eine Linie mit den Schienen (6) gebracht werden soll und zu welchem Zweck der Rohrschienenwagen (9) an dem betreffenden Ende mit zwei vorgenannten Aufpralldetektionssensoren (11) versehen ist, deren aufprallempfindliches Element (11a) unter dem Fahrgestell (13) auf der Höhe der Schienen (6) herausragt, und in einem Abstand voneinander der etwas größer als der Abstand zwischen den Schienen (6) ist, um auf diese Weise eine schlechte Ausrichtung des Rohrschienenwagens (9) zu erkennen, wenn, bei dem Einfahren auf die Schienen (6) einer der beiden Aufpralldetektionssensoren (11) ein Aufprallsignal erzeugt.

13. Rohrschienenwagen nach Anspruch 12, **dadurch gekennzeichnet, dass** die Aufpralldetektionssensoren (11) symmetrisch zur Längssymmetrieebene zwischen den Spurkranzrädern (10) links und rechts von dem Rohrschienenwagen (9) angeordnet sind.

14. Rohrschienenwagen nach Anspruch 13, **dadurch gekennzeichnet, dass** er als automatisch geführtes Fahrzeug ausgeführt ist, das mit einem eine programmierte Steuerung umfassenden Bordcomputer (24) versehen ist, um eine bestimmte Strecke über den Weg von einer Schiene (6) zu einer nächsten Schiene zurückzulegen, wobei die Steuerung mit den Sensoren (23) der Aufpralldetektionssensoren (11) verbunden ist und der Bordcomputer (24) mit einem Korrekturalgorithmus versehen ist, um die Ausrichtung des Rohrschienenwagens (9) zu korrigieren, wenn der Bordcomputer (24) ein Signal von einem der beiden Sensoren (23) erhält.

## Revendications

1. Capteur de détection d'impacts pour un chariot sur rails tubulaires, ledit capteur de détection d'impacts étant composé d'un arbre (14) et d'une soupape conique (15) comprenant une tige de soupape (16) qui, à l'état de repos, s'étend dans la direction coaxiale à travers l'arbre (14) avec un jeu latéral dans l'arbre (14), dans lequel, à une extrémité, l'arbre (14) est équipé d'un siège de soupape conique (17) pour la soupape conique (15), et dans lequel le capteur de détection d'impacts (11) est muni d'un ressort de rappel (19) qui est configuré pour tirer ou pousser la soupape conique (15) dans une direction axiale contre le siège de soupape (17), et dans lequel la tige de soupape (16) ou l'arbre (14), à l'extrémité du capteur de détection d'impacts (11) qui comprend la soupape conique (15) est pourvu d'un élément sensible aux impacts (11a) qui, dans le cas d'un impact latéral, est configuré pour faire en sorte que la soupape conique (15) se déplace dans la direction latérale par rapport au siège de soupape (17) et, par conséquent également pour faire en sorte que la tige de soupape (16) se déplace dans la direction axiale par rapport à l'arbre (14), à l'encontre de la force exercée par le ressort de rappel (19), dans lequel la tige de soupape (16) est munie d'un rebord (21) et l'arbre (14) est muni d'un capteur (23) destiné à détecter la position du rebord (21) par rapport au capteur (23).

2. Capteur de détection d'impacts selon la revendication 1, **caractérisé en ce que** le rebord (21) du capteur (23) est en métal et que le capteur (23) est un capteur inductif.

3. Capteur de détection d'impacts selon la revendication 2, **caractérisé en ce que** la tige de soupape (16) et l'arbre (14) sont réalisés en métal et que le capteur (23) est un capteur inductif.

4. Capteur de détection d'impacts selon l'une quelconque des revendications précédentes, **caractérisé en ce que** l'élément sensible aux impacts (1 1a) est réalisé sous la forme d'une roue qui est montée en rotation libre autour d'un essieu dans le prolongement de la tige de soupape (16).

5. Capteur de détection d'impacts selon l'une quelconque des revendications précédentes, **caractérisé en ce que** la soupape conique (15) se rétrécit de manière conique en direction de la tige de soupape (16), tandis que le siège de soupape (17) forme une entrée de l'arbre (14) qui se rétrécit de manière conique.

6. Capteur de détection d'impacts selon l'une quelconque des revendications précédentes, **caractérisé en ce que** la soupape (15) et le siège de soupape (17) possèdent une conicité d'environ 45°.

7. Capteur de détection d'impacts selon l'une quelconque des revendications précédentes, **caractérisé en ce que** le rebord (21) forme un point de pivotement pour la tige de soupape (16) dans l'arbre (14) autour d'un essieu perpendiculaire à l'axe de l'arbre (14).

8. Capteur de détection d'impacts selon l'une quelconque des revendications précédentes, **caractérisé en ce que** le diamètre externe du rebord (21) est légèrement inférieur au diamètre interne de l'arbre (14).

9. Capteur de détection d'impacts selon l'une quelconque des revendications précédentes, **caractérisé en ce qu'**une partie de la tige de soupape (16) fait saillie par rapport à l'arbre (14) à l'autre extrémité de la soupape (15), dans lequel ladite extrémité est pourvue d'une potence (20) et d'un ressort (19) qui est mis sous tension entre ladite potence (20) et l'arbre (14).

10. Capteur de détection d'impacts selon la revendication 9, **caractérisé en ce que** le ressort (19) est monté autour de l'extrémité saillante susmentionnée de la tige de soupape (16).

11. Chariot sur rails tubulaires, équipé d'au moins un capteur de détection d'impacts (11) selon l'une quelconque des revendications précédentes, dans lequel l'arbre (14) du capteur de détection d'impacts (11) est monté sur le châssis (13) du chariot sur rails tubulaires (9).

12. Chariot sur rails tubulaires selon la revendication 11, **caractérisé en ce que** ledit chariot sur rails tubulaires est équipé de roues à boudins (10) pour pouvoir entamer ou achever un parcours sur des rails tubulaires parallèles (6) avec son extrémité avant ou arrière par rapport à un chemin en béton (4), raison pour laquelle le chariot sur rails tubulaires (9) doit être mis en alignement avec les rails (6) et raison pour laquelle le chariot sur rails tubulaires (9) est équipé, à l'extrémité concernée de deux capteurs de détection d'impacts susmentionnés (11) dont l'élément sensible aux impacts (11a) fait saillie par rapport au dessous du châssis (13) au niveau des rails (6) et à une distance l'un de l'autre qui est légèrement supérieure à la distance qui sépare les rails (6) dans le but de détecter de cette manière un mauvais alignement du chariot sur rails tubulaires (9) lorsque, lors du passage sur les rails (6), un des deux capteurs de détection d'impacts (11) génère un signal d'impacts.

13. Chariot sur rails tubulaires selon la revendication 12, **caractérisé en ce que** les capteurs de détection d'impacts (11) sont disposés de manière symétrique par rapport au plan de symétrie longitudinal entre les roues à boudins (10) à gauche et à droite du chariot sur rails tubulaires (9).

14. Chariot sur rails tubulaires selon la revendication 13, **caractérisé en ce qu'**il est réalisé sous la forme d'un véhicule guidé de manière automatique qui est équipé d'un ordinateur de bord (24) qui comprend un dispositif de commande programmé pour couvrir une certaine trajectoire sur le tracé d'un rail (6) à un rail suivant, dans lequel le dispositif de commande est relié aux capteurs (23) des capteurs de détection d'impacts (11) et l'ordinateur de bord (24) est équipé d'un algorithme de correction destiné à corriger l'alignement du chariot sur rails tubulaires (9) dans le cas où l'ordinateur de bord (24) reçoit un signal à partir d'un des deux capteurs (23).
